# EUROPEAN PATENT SPECIFICATION

(11) **EP 2 611 117 B1**
(45) Date of publication and mention of the grant of the patent: **05.10.2016**
(21) Application number: 11196110.8
(22) Date of filing: 29.12.2011
(51) Int. Cl.: H04M 1/02

(54) **Cooperative displays**
Kooperative Anzeigen
Affichages coopératifs

(43) Date of publication of application: 03.07.2013
(73) Proprietor: BlackBerry Limited, Waterloo, ON N2K 0A7 (CA)
(72) Inventor: Eaton, Eric Thomas, Sunrise, FL Florida 33323 (US); Hayes, David Jeffrey, Sunrise, FL Florida 33323 (US); Holman IV, Martin Earl, Sunrise, FL Florida 33323 (US)
(74) Representative: Bryn-Jacobsen, Caelia

(56) References cited:
- EP-A1- 2 065 783
- EP-A2- 2 139 210

## Description

### FIELD OF THE DISCLOSURE

The present disclosure generally relates to mobile devices and more particularly to mobile devices with more than one display.

### BACKGROUND

Handheld electronic devices may include sensors which measure a change in position or orientation of the handheld electronic device relative to gravity, due to acceleration, within a geographic location, or relative to a combination of the foregoing. Software executed with the handheld electronic device uses this change of position or orientation to produce applications. These applications include navigation, location tracking, and game control.

Several handheld electronic devices include more than one display. Efficient use of two displays with applications is a challenge. These challenges include determining which information to display on which of the two displays based on device orientation, power management of displays, and the capabilities such a resolution of each display. This is especially true when two displays may not be visible to the user simultaneously, such as a front facing display and a back facing display.

EP2139210 relates to a portable electronic apparatus comprising a casing, a first displaying module, a second displaying module, a communicating module, a sensing module, and a controlling module.

EP2065783 relates to a portable electronic apparatus having first and second display areas that provides an orientation sensor output signal indicative of a spatial orientation of the apparatus.

The present invention is set out in the independent claims, with some optional features set out in the claims dependent thereto.

### BRIEF DESCRIPTION OF THE DRAWINGS

The accompanying figures, where like reference numerals refer to identical or functionally similar elements throughout the separate views, and which together with the detailed description below are incorporated in and form part of the specification, serve to further illustrate various examples and to explain various principles and advantages all in accordance with the present disclosure, in which:
FIG. 1 illustrates an example of a handheld electronic device having two displays operative to display coordinated information;
FIG. 2 illustrates the handheld electronic device of FIG. 1 being flipped, or turned over;
FIG. 3 illustrates the handheld electronic device of FIG. 1 that has been flipped, illustrating a second display;
FIGS. 4-10 illustrate a sequence of coordinated actions between a first display and a second display, of the handheld electronic device of FIG. 1;
FIGS. 11-14 illustrate an alternative sequence of coordinated actions between a first display and a second display, of the handheld electronic device of FIG. 1;
FIGS. 15-19 is a series of figures illustrating another example of a handheld electronic device with a double acting hinge;
FIG. 20 is a flow diagram illustrating a method using a handheld electronic device having a plurality of display displays operative to display coordinated information;
FIG. 21 is a block diagram illustrating a detailed view of an example handheld electronic device.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the present subject matter in virtually any appropriately detailed structure and function. Further, the terms and phrases used herein are not intended to be limiting, but rather, to provide an understandable description of the concepts.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically.

The phrase a "change in viewing orientation" is used herein to define the orientation and/or position of the handheld electronic device is changed with respect to a user's original line of sight. The change in viewing orientation may be in response to a flipping, rotating, or otherwise moving around at least one axis of rotation the handheld electronic device, whereby a viewable display in a user's original line of sight is moved to be at least partially obstructed from the user's new line of sight as compared with the original line of sight. For example, a user may stand and hold the handheld electronic device in his/her hand with a first display facing the user and the second display facing the ground. In this example, the two displays of the handheld electronic device are oriented back-to-back. The user flips the handheld electronic device so the first screen is facing the ground and the second screen is facing the user. In another example, the user moves with respect to the handheld electronic device and a viewable display in a user's original line of sight is moved to be at least partially obstructed from the user's new line of sight. This example of the user changing position is applicable to walking around a double sided display. The "change in viewing orientation" is used to change or swap which display in a multiple display handheld electronic device is currently designated "primary" by the active focus of the user, where other displays are designated as "secondary". A sensor operative to detect a "change in viewing orientation" may be sensors used to determine a relative or absolute change in position or orientation of the handheld electronic device, a change in the position of the user, a change in the direction of gaze of the user, a change in position of user's hands, selection of a button or icon, or a combination thereof.

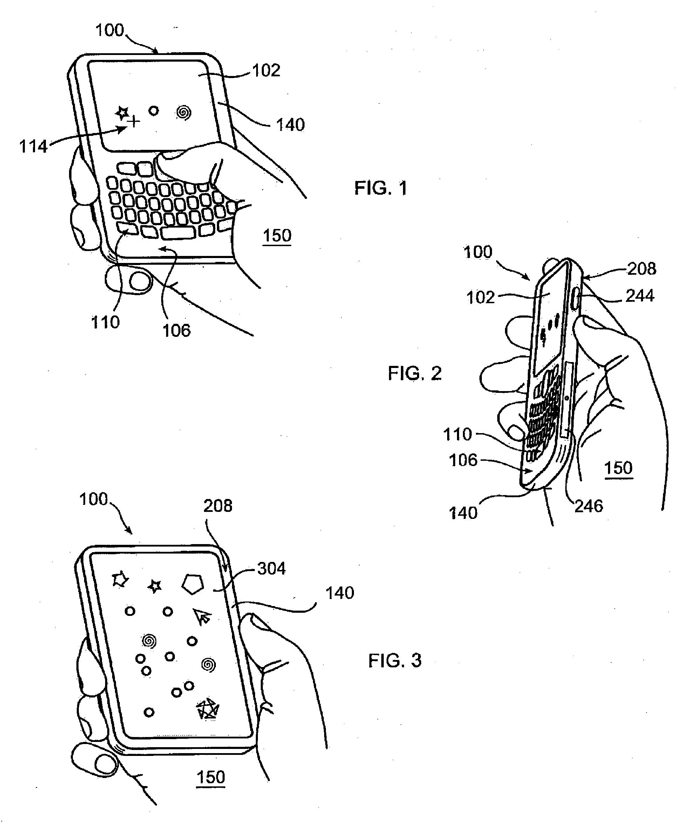

With reference to FIGS. 1-3, a computing handheld electronic device 100 includes a first side 106 having a first visible output display 102, and a second side 208, in this example a back side, having a second visible output display 304, collectively assembled within a housing or case 140. One or more processors described further below are operative to control output of the first display 102 and the second display 304 simultaneously and/or sequentially. In an example, information or content displayed on the first display 102 and the second display 304 are related to each other.

In FIG. 1, a user 150 is holding handheld electronic device 100 so that a first display 102 is viewable. A keyboard, such as a mechanical keyboard 110 is provided, operative in cooperation within one or more processors described further below. In FIGS. 1-3, keyboard 110 is positioned to occupy a portion of first side 106, although keyboard 110 may fold and/or slide out from within the handheld electronic device 100. One or more openings 244 may provide access to a SIM card, battery, storage or memory expansion, connector, or any other feature of handheld electronic device 100, including for example, an additional slide-out display, or a touchpad, keypad, camera lens, camera flash, microphone, or stand.

In FIG. 2, the user 150 is turning the handheld electronic device 100 over, where first side 106 is moved to a position obstructed from direct observation by the user 150, and second side 208 is moved to a position facing towards direct observation by the user 150. Herein, this action is referred to as a 'flip' or change in viewing orientation of handheld electronic device 100. In FIG. 3, the flip has been completed, and a second display 304 is in view of the user 150.

In one example, a flip corresponds to a changed orientation of handheld electronic device 100 corresponding to a rotation of handheld electronic device 100 about an axis, which lies approximately or substantially upon a plane coplanar with a surface of at least one of the first display 102 and the second display 304, and where the rotation is at least about 45 degrees to 180 degrees, so that either one or the other of the first display 102 and the second display 304 is readily viewable to a user of the handheld electronic device 100 at a given point in time. In another example, a flip may be implemented using one or more spoken commands and/or an actuator such as a button.

Herein, a resting or starting angular disposition, or a normal orientation for viewing of first display 102 or the second display 304 of the handheld electronic device 100, is defined to indicate a starting orientation, average starting orientation, or the most recent orientation of the handheld electronic device 100 during use. For a handheld device, this normal orientation typically represents a comfortable orientation for both viewing and manipulating the handheld electronic device 100, for the user. A normal orientation may represent an orientation or angular disposition of any angle, including an orientation that is flat, perpendicular, or at a fixed angle relative to gravitational forces. A normal orientation is periodically re-determined or recalculated, to accommodate a shift in user position, or passing of the handheld electronic device 100 to a different user. An average normal orientation may be calculated by averaging multiple orientation samples during either a brief or extended time interval prior to initiating movement of cursor.

Establishing a normal orientation calibrates the handheld electronic device 100 for a baseline from which subsequent moves are carried out. Calibration may also be performed using an option or menu on the display, where moving the indicator to a predefined region of the display is performed independent of an orientation of the handheld electronic device, and a current orientation of the handheld electronic device is defined as being level within the present position. Such calibration may be used to indicate that a flip has been commenced, reversed, or completed, and may be set during fabrication or initial assembly of the handheld electronic device 100, or may be adjustable by the user.

A determination of a flip may alternatively be sensed by an accelerometer which is used to sense the orientation of the device with respect to the earth's surface. Using this technique, the primary display is considered to be the display whose angle between a vector pointing from the earth's center to the device and a vector perpendicular to the display and pointing from the back of the display to the front of the display is smaller than the same angle for all the other displays. A flip is considered to have occurred when the so designated primary display changes from one display to another.

A determination of a flip may alternatively be sensed by one or more proximity sensors operative to determine the position of a user's hand or if the user's hand or other object is covering predetermined regions of the handheld electronic device 100. In this example the position of the hands is indicative of which side, the first side 106 or the second side 208, or which display, the first display 102 or the second display 304, is more obstructed and which is less obstructed and therefore likely to be viewed. Sensors may be positioned along an edge or along the first side 106 and/or the second side 208 of the handheld electronic device 100. In another example, hand position is determined by a flesh detector.

In another example, a light sensor, for example a sensor used to control display brightness, may be used to determine which display is facing downward due to a dark reading, and which display is viewable due to a lighter reading, particularly where there are light sensors located on each of the first side 106 and the second side 208. In another example, facial recognition and/or an eye gazing sensor is used to determine which of the displays, i.e. the first display 102 and the second display 304, is being viewed by a user. Sensors measuring parameters other than orientation, rotation, acceleration, or position are important in situations where a user is laying down and the primary display of the handheld electronic device 100 is being viewed at an angle less than 90 degrees with respect to the ground (e.g., typical when reading in bed).

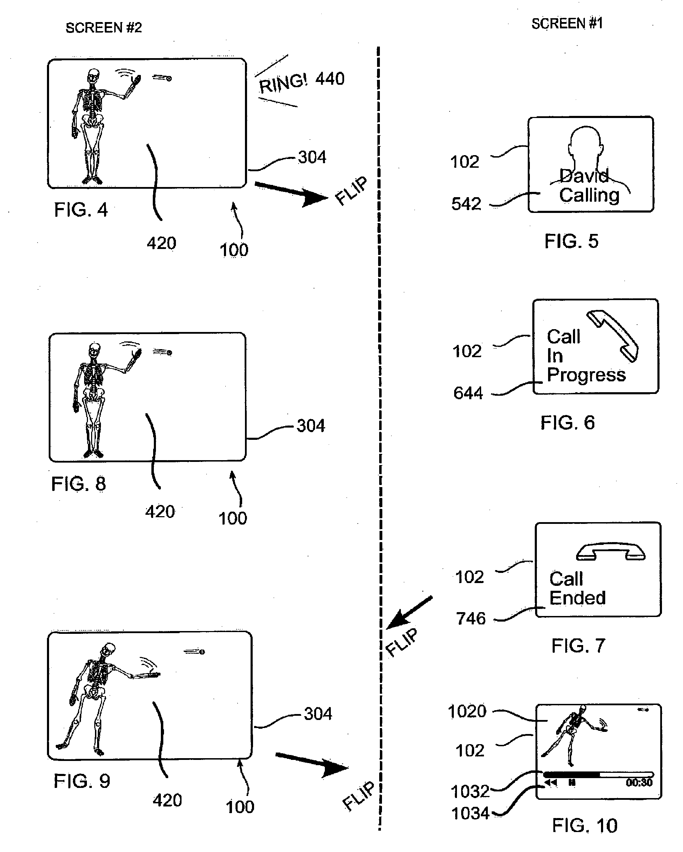

FIGS. 4-10 illustrate a sequence of coordinated actions between a first display 102 and a second display 304 of the handheld electronic device of FIG. 1. Actions shown on the first display 102 are depicted in FIGS. 5-7 and 10, and actions shown on the second display 304 are shown in FIGS. 4 and 8-9. In this example, FIGS. 4, 8, and 9 of the second display 304 illustrate presenting a multimedia file. To assist with understanding, the multimedia images presented on the second display 304 in FIGS. 4, 8, and 9 are shown along the left-hand side of this drawing sheet while the images presented on the first display 102 in FIGS. 5-7 and 10 are shown along the right-hand side of the drawing sheet. Also, the images on this drawing sheet are shown sequentially in time from the top to the bottom. In this example, the second display 304 is displaying sequentially indexed content, such as a movie, music, game or other multimedia presentation. Specifically, a multimedia file 420 (e.g., a movie of a skeleton throwing a ball)is shown. For sake of simplicity, in FIGS. 4-10 only the first display 102 and the second display 304 are illustrated, the remainder of the handheld electronic device 100 is not shown.

In FIG. 4, the user is viewing the multimedia file on the second display 304, when an event 440, for example an incoming call, text, email, or calendar reminder, is manifested. The text indicia "RING" in the illustration indicates an incoming call tone, however any indicator may be provided, including vibration of the handheld electronic device 100, a visible indicator rendered on the handheld electronic device 100, and/or a visible indicator displayed upon the second display 304.

To view information regarding the event, the handheld electronic device 100 is flipped or turned over, to make the first display 102 viewable by the user. The indicia "FLIP" indicates that the handheld electronic device 100 has been turned over to reveal the accompanying first display 102. When the handheld electronic device 100 determines a flip is occurring, or has occurred, the multimedia file on the second display 304 is paused, dimmed, shut-off, backlight deactivated, muted, reduced in volume, or is otherwise modified. In the example of FIG. 5, the first display 102 is turned on and information 542 indicating the caller's name of an incoming call is displayed on the first display 102. In FIG. 6, the user accepts the telephone call and a "call in progress" indicator 644 is displayed.

In FIG. 7, the telephone call is completed and the conclusion is signaled by the handheld electronic device 100 using various user inputs or telephone call processing, for example, by displaying a "call ended" 746 indicator on the first display 102. At this point, the handheld electronic device 100 automatically resumes rendering the multimedia file 420 of the skeleton throwing a ball. This automatic resumption can be a combination of one or more of continuing to play the multimedia file, i.e. "unpausing" the playback, turning up the display brightness, increasing the volume, or any combination of these.

In another example, a subsequent flip of the handheld electronic device 100, with or without the user manually terminating the telephone call, as illustrated in FIG. 8, causes the display 102 to turn off (not shown) and causes the display 304 to turn on and automatically resume rendering the multimedia file 420. In FIG. 9, the playback of the multimedia file 420 is resumed, and the displayed elements continue their previous motions.

Another example of automatically controlling a plurality of displays on a handheld electronic device is shown in FIG. 10. In this example, a flip is performed by the user during playback of multimedia file 420, without an intervening event. Software executing on the handheld electronic device 100 displays additional information on the first display 102 about the multimedia file on the second display 304. This additional information on the first display 102 may include playback controls, display settings, metadata about the multimedia, including author and title of the multimedia file and more. In the example of FIG. 10, a movie timeline 1032 and movie controls 1034 are displayed. Additionally, a copy 1020 of the movie 420 displayed on the second display 304 may be shown on the first display 102. In another example, the first display 102 and the second display 304 have differing capabilities. These capabilities include that the second display 304 may have a larger size, 3-D capabilities, resolution, speed, and/or color rendering capability, with respect to the first display 102, enabling display 304 to better display media files. While the first display 102 may not display a given media file with the same quality as the second display 304, display 304 may nonetheless be adequate to inform the user regarding the sequence of events currently displayed on the second display 304, while the handheld electronic device 100 is positioned with the second display 304 out of view. The examples shown in FIGS. 4-10 should be considered illustrative, and displays 102 and 304 may display any content, whether or not the first display 102 and the second display 304 contain related information.

In a further example, input devices such as touchpad keys or mechanical keys or buttons associated with the first display 102, for example keys of keypad 110, may have different functionality depending on which side 106, 208 is flipped to be viewed by the user. In one example, a keypad, for example a QWERTY keypad with mechanical buttons, or a touch sensor, functions as a pointing device, such as mousepad, or touch pad, when the first side 106 or second side 208 upon which it resides has been flipped away from view of the user. In this manner, touching or pressing keys to a right side of the keypad (as positioned away from view) causes a corresponding motion, to the right, of a cursor displayed upon the viewable first display 102 or second display 304, with similar effects for left, up, down, or diagonal presses of keys.

In summary, FIGS. 4-9 illustrate a movie file playing on the second display 304 and an incoming call on the first display 102, respectively. There are numerous cooperative display event actions that are possible. Other examples include playing a video on one display, and engaging in instant messaging conversation on another, or browsing a first website on one display, and a second website on another, or any combination of functionality supported by the handheld electronic device 100, including for example using a camera, an instant messaging application, an email application, telephony, mapping or navigation application, game, calendar, search engine, system configuration application, task or project manager, industrial application, or any other application. Additionally, one display may display an application, for example game play, and the other display status information pertaining to the application, for example a game score, player status, or help information. In a mapping application, an address could be selected on one display, and a flip produces a corresponding map on the flipped display. Similarly, a URL could be selected on one display, and the corresponding web site or application presented on the flipped display. In a navigation application, a desired type of location, for example a gas station, could be identified on one display, with nearest stations displayed on the flipped display. It may be advantageous for selection on a first display to be performed by pinching, touching, dragging a selection, or any other known method, with content corresponding to the selection displayed on the flipped display.

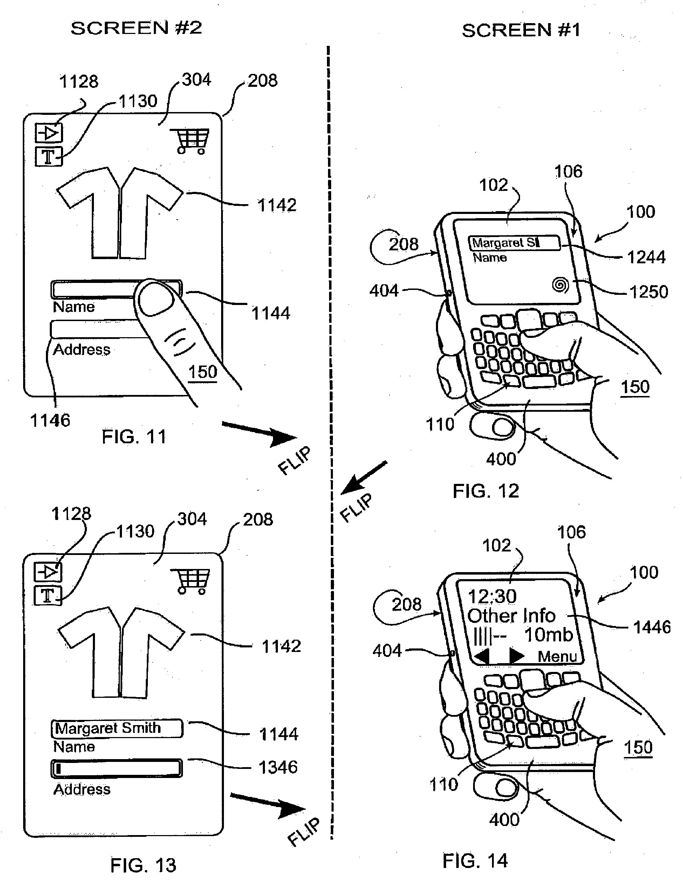

Referring now to FIGS. 11-14, an alternative sequence of coordinated actions between a first display 102 and a second display 304 of the handheld electronic device of FIG. 1 is shown. Actions presented on the first display 102 are shown in FIGS. 12 and 14. Actions presented on the second display 304 are shown in FIGS. 11 and 13. Again, in this example, the images presented on the second display 304 in FIGS. 11 and 13 are shown along the left-hand side of this drawing sheet while the images presented on the first display 102 in FIGS. 12 and 14 are shown along the right-hand side of the drawing sheet. Also, the images on this drawing sheet are shown sequentially in time from the top to the bottom as denoted with the series of arrows labeled "FLIP".

In the example of FIGS. 11-14, the user is engaged in shopping on the internet using the handheld electronic device 100. In FIG. 11, on the second display 304 an item 1142 has been selected and the user 150 is prompted to enter information in a text input box 1144 in the field marked "Name". While a touch display is illustrated, it should be understood that other forms of user input may be provided upon the second side 208 of the handheld electronic device 100, for example an optical joystick and optionally one or more buttons, with which the user may interact with contents displayed upon the second display 304. Alternatively, the user may interact with a touch display, joystick, and/or button disposed upon the first side 106 with the first display 102, whether or not the first side 106 is visible during the interaction.

In FIG. 12, the handheld electronic device 100 has been flipped to reveal the first display 102, upon which the selected text input field 1244 has been represented. During or after the flip, a suitable indication of a pending flip action may be indicated to the user, for example using a displayed icon 1250, vibrating the handheld electronic device 100 (not shown), or providing an audible indication (not shown). This indication may be particularly advantageous if a delay in displaying content upon display 102 is expected.

After the flip, the user may then use keyboard 110 to enter the appropriate information in the corresponding text field. Advantageously, the item selected upon the second display 304 may be zoomed, or expanded in size for easier viewing and manipulation, when represented upon display 102, particularly where only a single display element of the second display 304 is represented upon the first display 102.

When finished, the user may indicate completion of the immediate task or activity by pressing an enter key or button which signals to the handheld electronic device 100 that the task is complete. Alternatively, simply flipping the handheld electronic device 100 may indicate completion of the task, whereby the information typed using the first display 102 is entered or accepted, as if selecting an "enter key", without requiring further action by the user. Similarly, based upon a flip back to the second display 304, the next field 1346 marked "Address" may become actively selected. The user may then resume selecting fields for data entry, or take some other action with respect to information displayed upon the second display 304. With each flip and corresponding text entry and return flip, instructions executing in the handheld electronic device 100 may complete the information entered within the corresponding field on the second display 304, based upon the information provided using the first display 102, and may further advance a text cursor 114 to the next field, if applicable.

It should be understood the use of a flip to act as an "enter key" provides many different cooperative navigation scenarios between the first display 102 and the second display 304. For example, traversing a list of folders is possible by flipping the handheld electronic device. The process begins with a folder list being displayed on the first display 102. A flip of the handheld electronic device 100 on the second screen displays the contents of a first folder. A subsequent flip back to the first display 102 displays the contents of a second folder. Likewise, a subsequent flip back the second display 304 displays the contents of a third folder, etc.

While an active field is correlated with a flip in FIGS. 11-12, an alternative example of indicating a flip is now described. Using a navigation control such as an optical mouse or touch by the user, a displayed object is dragged to or toward a predefined region of a display, such as the edge, corner or to an icon. For example, to an icon 1128 representing the intended viewing display and/or an icon 1130 representing text entry. While both icons 1128, 1130 are illustrated in FIGS. 11 and 13, other combinations of icons are contemplated in this example. Icon 1128 indicates that the first display 102 should be formatted with information related to or complementary to the information currently displayed with or dropped upon icon 1128. Icon 1130 indicates that the first display 102 should be formatted for entering text relating to the information currently displayed with or dropped upon icon 1130. The first display 102 may similarly be provided with icons 1128, 1130, or other icons operative to carry out or facilitate the examples described herein. Icons 1128, 1130 may be activated or selected by drag and drop, menu selection, cursor click, touch, spoken command, or any other method.

After the selected item has been dragged to the designated location, the handheld electronic device 100 may thereafter be turned over or manipulated to reveal the intended display, whereupon content related to the dragged item may be displayed. The content displayed upon the intended display, such as the selected text input field 1244, may be a zoomed field, as indicated in FIG. 12, or may be related information, for example higher resolution, larger, color, 3-D capabilities, or alternative images of the selected item, or further related information.

The handheld electronic device 100 may determine, for example, that text entry is intended after a flip based upon a text field being selected prior to the flip. Alternatively, a flip activation state, or enablement of the presentation of corresponding information on an alternate display after a flip, may be based upon a currently active mode, or based on a context of activities during a general session, an application specific session, or the application(s) currently active. Alternatively, flip activation may be enabled manually, and may further be activated for a specific time period. In another alternative, flip activation may be enabled or disabled any time. For example, in the flip activation is enabled when the first display is displaying information relative to the content on the second display

FIG. 14 illustrates alternative information 1446 that may be displayed upon the first display 102 while information is displayed upon the second display 304, or after the handheld electronic device 100 is flipped to position the first display 102 to a viewing angle of the user. Such information may include other information which may or may not be directly relevant to a current activity of the user, including information which may generally be considered useful. Examples may include a cellular, Wi-Fi, or other antenna or signal strength indicator, a current operating mode of the handheld electronic device 100, an amount of data transmitted, time information, control buttons for advancing or returning a current operation, or if the second display 304 is not a touch display, soft key indicia corresponding to an adjacent physical key or button (not shown). Such information may generally correspond to a flip when no specific action is intended based upon current activities relating to the second display 304.

While the examples indicated a target, or main application being viewed on the second display 304, it should be understood that a main application may alternatively be displayed upon the first display 102, and related, supporting, or ancillary activity may be displayed upon display 304, either before or after a flip. Further, another physical keypad 110 may be provided upon the second side 208 of the handheld electronic device 100, or alternatively, a touch activated keypad may be displayed upon the second display 304, optionally together with other displayed information.

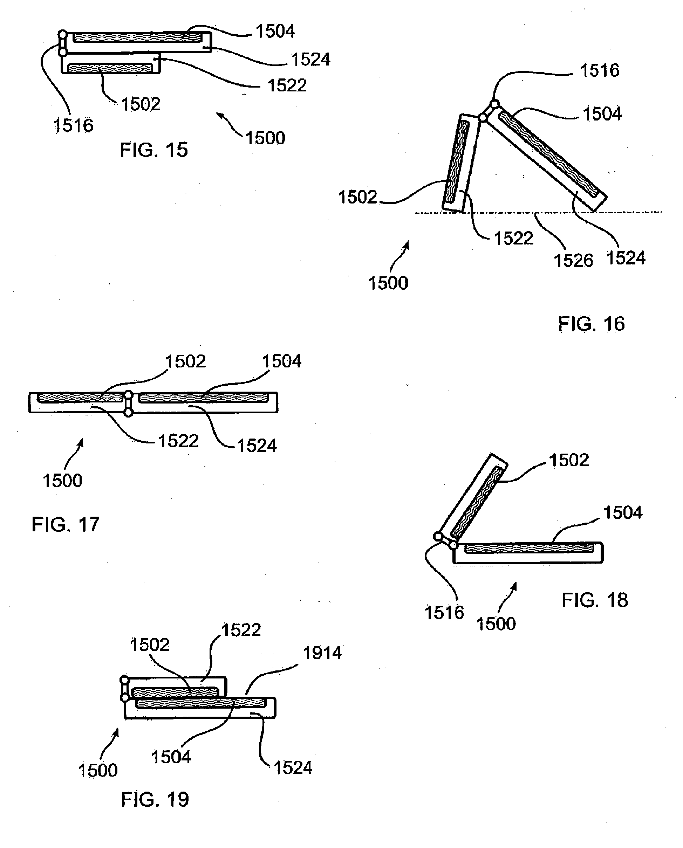

In the foregoing figures, the first display 102 and the second 304 are illustrated each having a display side shown, and a reverse side (not shown) disposed within an interior of the handheld electronic device 100, the reverse sides of each display facing each other within the interior of the handheld electronic device housing at all times. FIGS. 15-19 illustrate another example of multiple display configurations that work with the cooperative display processes described herein. Specifically, FIGS. 15-19 illustrate a series of figures with a double acting hinge display for an alternative handheld electronic device 1500. Specifically, FIG. 15 indicates a first display 1502 and a second display 1504 which may have alternative orientations, or may be movable as shown in FIGs. 16-19. In addition, a hinge 1516 may connect case portions 1522 and 1524, of the handheld electronic device 1500. In the examples shown, hinge 1516 is a double acting hinge; however, any manner of movable connection known or hereinafter developed may be used, including for example, rotating and/or twisting connections, and wireless connections. Case portions 1522, 1524 house, respectively, first display 1502 and second display 1504, whereby an orientation of first display 1502 and second display 1504 may be changed relative to each other.

In FIG. 16, portions 1522, 1524 are arranged such that first display 1502 and second display 1504 are maintained at a convenient viewing angle, for one or two viewing users, while handheld electronic device 1500 is resting on a horizontal surface 1526. Where two users are viewing and/or controlling the handheld electronic device 1500, the users may be engaged in a mutually interactive activity, for example a learning process, information sharing, or a game. A flip as herein described may take place when the handheld electronic device 1500 is changed from the orientation of FIG. 15 to the orientation of FIG. 16. For example, in response to the flip, or change in viewing orientation of first display 1502 and second display 1504, the content of displays 1502 and 1504 are reconfigured and/or reoriented, for example, for two viewers.

In FIG. 17, the handheld electronic device 1500 is oriented so that displays 1502 and 1504 are positioned to be substantially coplanar, or may alternatively be otherwise angled relative to each other, whereby both first display 1502 and second display 1504 may be easily viewed by a single user. In this manner, content of the first display 1502 may logically continue onto the second display 1504, or may otherwise be logically related to the second display 1504. The relation of relative display content may be established, for example, when the handheld electronic device 1500 is changed from the configuration of FIG. 15, to the orientation of FIG. 17.

FIG. 18 illustrates an orientation of first display 1502 and second display 1504 whereby observation of displays 1502 and/or 1504, by more than one user, is rendered more difficult. Alternatively, display 1502 may be configured to project light towards display 1504. In another example, FIG. 19 illustrates a step in a series of relative orientation of displays 1502, 1504, from the orientation illustrated in FIG. 18, to the orientation illustrated in FIG. 19.

With reference to FIG. 19, first display 1502 and second display 1504 face each other, at which point this flip may indicate to software executing the handheld electronic device 100 that both displays 1502, 1504 should be turned off to conserve power. Alternatively, in this example, as second display 1504 is larger than first display 1502 and portion 1914, it may be advantageous to continue to display information upon the visible portion 1914 of second display 1504, for example, time of day, signal strength, call status, song playing information, or media controls.

In yet another example, a flip corresponds to rotation of a display without turning the handheld electronic device 1500 over, for example a threshold planar rotation of 45 to 180 degrees. In this example, turning the handheld electronic device 1500 to pass the handheld electronic device 100 to a second user may include rotating the handheld electronic device 1500 about 45 to 180 degrees, so that the second user may more easily view the same display as the first user. Software executing on the handheld electronic device 1500 may interpret sensor data to indicate a flip has occurred, and information displayed on displays 1502 and/or 1504 may be modified as described elsewhere herein. Additionally or alternatively, for security purposes, information previously designated as personal, sensitive, or confidential may be removed from or not be displayed upon the currently viewed display, or applications enabling display of sensitive information cannot be launched in the passed, or flipped orientation. In this manner, the handheld electronic device 1500 may be handed to or turned to another user without revealing secure information. The foregoing security measures may also be undertaken with examples viewed by multiple users, where a second display intended to be viewed by a second user does not display secure information.

Herein, flipping functionality associated with turning over the handheld electronic device 1500 to display an alternate display may be construed to apply equally to rotating or turning a single viewed display, as described above. For example the currently viewed display changes content as described herein as if it were a flipped display. The rotation or flip in one example is above a threshold angle and/or at a threshold speed. These thresholds as used by the software executing on the handheld electronic device 100, to respond that a flip occurs. Moreover, these thresholds distinguishes over actions caused by a user merely moving about the handheld device.

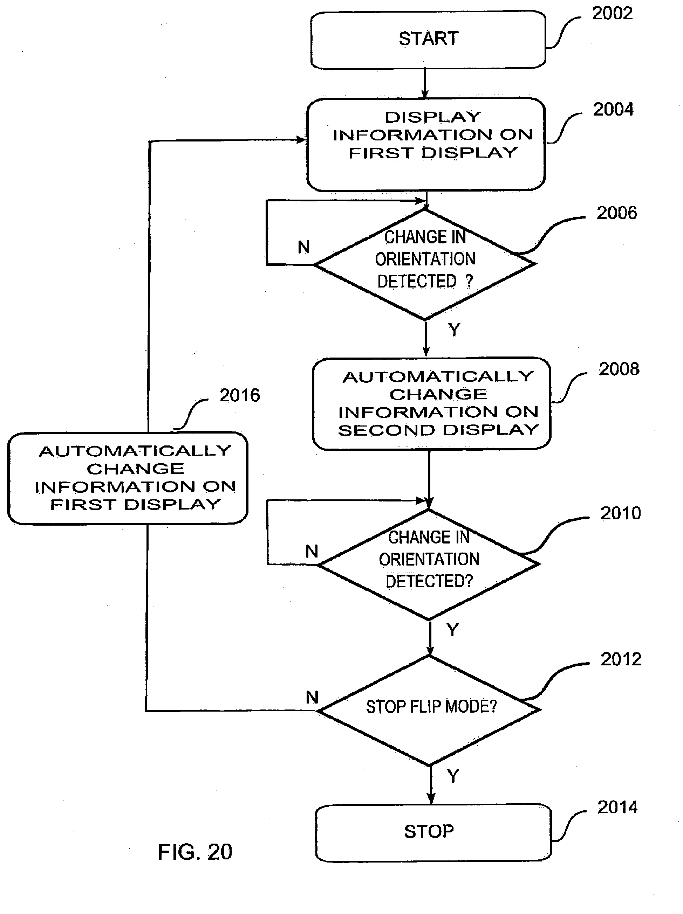

FIG. 20 is a flow chart of an example process on a handheld device for providing cooperative displays. The process begins in step 2002 and immediately proceeds to step 2004 in which information is presented on a first display, such as a movie described with reference to FIGS. 4-10 above or a shopping cart page with text entry required at a website described in FIGS. 11-14 above. A position of the handheld electronic device 100 is sensed such as a flip or rotation is detected in step 2006. In response to a change in orientation of the handheld electronic device 100 not detected, the process repeats step 2006. Otherwise, when the change in orientation of the handheld electronic device is detected the information on the second display is automatically changed. Another determination is made if a change in orientation is detected in step 2010. In the case there is no change in orientation detected, the process repeats at step 2010. Otherwise, in response to a change in viewing orientation detected in step 2010, a test in step 2012 is made to determine if the flip mode should be stopped. In one example, a user gesture or selection of a button indicates that the flip mode should stop and the process ends in step 2014. Otherwise, the process continues to step 2016, where the information on the first display is changed and the process returns to step 2004.

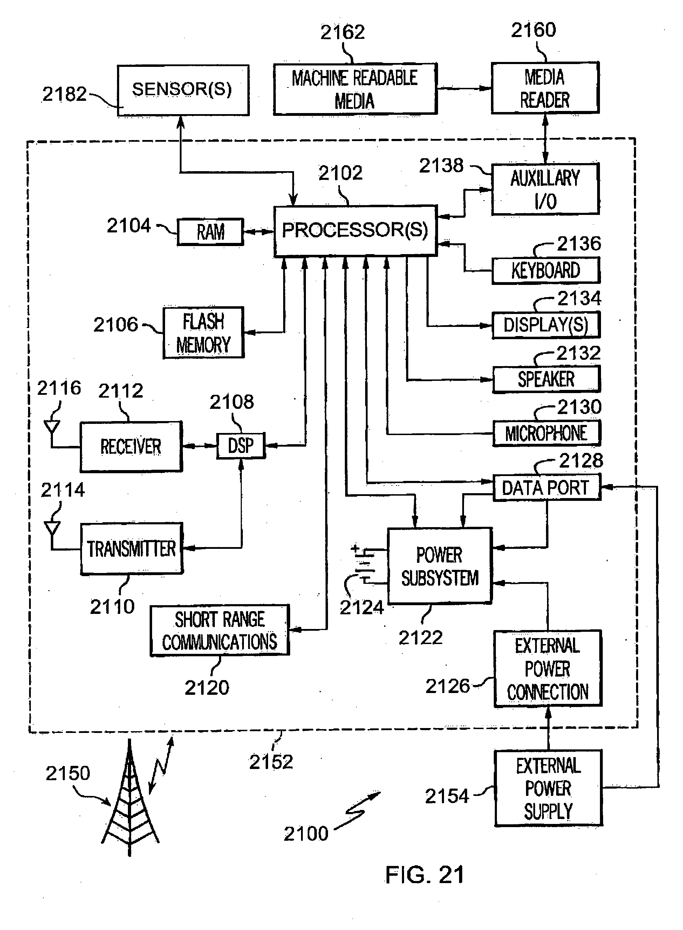

FIG. 21 is a block diagram of an example handheld electronic device 2152 and associated components 2100. In this example, a handheld electronic device 2152 is a wireless two-way communication device with voice and data communication capabilities. Such electronic devices communicate with a wireless voice or data network 2150 using a suitable wireless communications protocol. Wireless voice communications are performed using either an analog or digital wireless communication channel or combination thereof. Data communications allow the handheld electronic device 2152 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The handheld electronic device 2152 includes one or more sensors 2182 operative to indicate to one or more processors that a flip is occurring and/or has occurred. In this example, the sensor is shown external to the handheld electronic device 2152, however in other examples it is integrated into the handheld electronic device 2152 itself. Movement of the handheld electronic device 2152, including the sensing of acceleration or a change in viewing orientation or angular disposition of the handheld electronic device 2152 relative to the earth or another frame of reference or an inertial frame of reference, is sensed by one or more sensors 2182 incorporated into or associated with the handheld electronic device 2152, operative to sense such movement by any sensing device. Examples of sensing devices include one or more accelerometers, g-force meter, gravimeter, gradiometer, inclinometer, clinometer, tiltmeter, proximity sensor, RF detector, micro electro-mechanical system (MEMS), compass, gyroscope, or the like, which use any known technology, including liquid capacitive, piezoelectric, piezoresistive, piezoceramic, or other technology. Such devices or technology enable the conversion of movement information to an electric signal that may be interpreted by processor 2102. The sensor 2182 may include or be associated with a processor 2102 operative to convert, for example, an analog signal to a digital signal, or to otherwise prepare and condition an electric signal for processing by processor 2102.

Pairs or triplet combinations, or bi-axial or tri-axial implementations of sensor 2182, may be used for detecting movement in two or three dimensions. Sampling rates of sensor 2182 are selected to balance cost and other factors, with a requirement for the perception of responsiveness desired for the user. One or more accelerometers may provide information regarding a rate of speed or acceleration of the handheld electronic device 2152, and may also provide information pertaining to orientation of the handheld electronic device 2152, as well.

Algorithms or software which may be executed upon processor 2102 for converting spatial, coordinate, or other reference information embedded within such electric signal to an angular orientation of the sensing device and/or an orientation of a handheld electronic device into which the sensing device is connected or associated, is understood by one skilled in the relevant art.

The illustrated handheld electronic device 2152 is an example electronic device that includes two-way wireless communications functions. Such electronic devices incorporate communication subsystem elements such as a wireless transmitter 2110, a wireless receiver 2112, and associated components such as one or more antenna elements 2114 and 2116. A digital signal processor (DSP) 2108 performs processing to extract data from received wireless signals and to generate signals to be transmitted. The particular design of the communication subsystem is dependent upon the communication network and associated wireless communications protocols with which the handheld electronic device is intended to operate.

The handheld electronic device 2152 includes a microprocessor 2102 that controls the overall operation of the electronic device 2152. The microprocessor 2102 interacts with the above described communications subsystem elements and also interacts with other device subsystems such as flash memory 2106, random access memory (RAM) 2104, auxiliary input/output (I/O) device 2138, data port 2128, display 2134, keyboard 2136, speaker 2132, microphone 2130, a short-range communications subsystem 2120, a power subsystem 2122, and any other device subsystems.

A battery 2124 is connected to a power subsystem 2122 to provide power to the circuits of the electronic device 2152. The power subsystem 2122 includes power distribution circuitry for providing power to the handheld electronic device 2152 and also contains battery charging circuitry to manage recharging the battery 2124. The power subsystem 2122 includes a battery monitoring circuit that is operable to provide a status of one or more battery status indicators, such as remaining capacity, temperature, voltage, electrical current consumption, and the like, to various components of the electronic device 2152.

The data port 2128 is able to support data communications between the handheld electronic device 2152 and other devices through various modes of data communications, such as high speed data transfers over an optical communications circuit or over electrical data communications circuits such as a USB connection incorporated into the data port 2128 of some examples. Data port 2128 is able to support communications with, for example, an external computer or other device.

Operating system software used by the microprocessor 2102 is stored in flash memory 2106. Further examples are able to use a battery backed-up RAM or other non-volatile storage data elements to store operating systems, other executable programs, or both. The operating system software, device application software, or parts thereof, are able to be temporarily loaded into volatile data storage such as RAM 2104. Data received via wireless communication signals or through wired communications are also able to be stored to RAM 2104.

The microprocessor 2102, in addition to its operating system functions, is able to execute software applications on the electronic device 2152. A predetermined set of applications that control basic device operations, including at least data and voice communication applications, is able to be installed on the handheld electronic device 2152 during manufacture. Examples of applications that are able to be loaded onto the handheld electronic device may be a personal information manager (PIM) application having the ability to organize and manage data items relating to the handheld electronic device user, such as, but not limited to, e-mail, calendar events, voice mails, appointments, and task items.

Further applications may also be loaded onto the handheld electronic device 2152 through, for example, the wireless network 2150, an auxiliary I/O device 2138, data port 2128, short-range communications subsystem 2120, or any combination of these interfaces. Such applications are then able to be installed by a user in the RAM 2104 or a non-volatile store for execution by the microprocessor 2102.

In a data communication mode, a received signal such as a text message or web page download is processed by the communication subsystem, including wireless receiver 2112 and wireless transmitter 2110, and communicated data is provided the microprocessor 2102, which is able to further process the received data for output to the display 2134, or alternatively, to an auxiliary I/O device 2138 or the data port 2128. A user of the handheld electronic device 2152 may also compose data items, such as e-mail messages, using the keyboard 2136, which is able to include a complete alphanumeric keyboard or a telephone-type keypad, in conjunction with the display 2134 and possibly an auxiliary I/O device 2138. Such composed items are then able to be transmitted over a communication network through the communication subsystem.

For voice communications, overall operation of the handheld electronic device 2152 is substantially similar, except that received signals are generally provided to a speaker 2132 and signals for transmission are generally produced by a microphone 2130. Alternative voice or audio I/O subsystems, such as a voice message recording subsystem, may also be implemented on the electronic device 2152. Although voice or audio signal output is generally accomplished primarily through the speaker 2132, the display 2134 may also be used to provide an indication of the identity of a calling party, the duration of a voice call, or other voice call related information, for example.

Depending on conditions or statuses of the electronic device 2152, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short-range communications subsystem 2120 provides for data communication between the handheld electronic device 2152 and different systems or devices, which need not necessarily be similar devices. For example, the short-range communications subsystem 2120 includes an infrared device and associated circuits and components or a Radio Frequency based communication module such as one supporting Bluetooth^{®}, or ZigBee^{®} communications, to provide for communication with similarly-enabled systems and devices, including the data file transfer communications described above.

A media reader 2160 is able to be connected to an auxiliary I/O device 2138 to allow, for example, loading computer readable program code of a computer program product into the handheld electronic device 2152 for storage into flash memory 2106. One example of a media reader 2160 is an optical drive such as a CD/DVD drive, which may be used to store data to and read data from a computer readable medium or storage product such as computer readable storage media 2162. Examples of suitable computer readable storage media include optical storage media such as a CD or DVD, magnetic media, or any other suitable data storage device. Media reader 2160 is alternatively able to be connected to the electronic device through the Data port 2128 or computer readable program code is alternatively able to be provided to the handheld electronic device 2152 through the wireless network 2150.

Although specific examples of the subject matter have been disclosed, those having ordinary skill in the art will understand that changes can be made to the specific examples without departing from the scope of the disclosed subject matter. The scope of the disclosure is not to be restricted, therefore, to the specific examples, and it is intended that the appended claims cover any and all such applications, modifications, and examples within the scope of the present disclosure.

## Claims

1. A handheld electronic device (100), comprising:
a housing having a first side (106) and a second side (208);
a first display (102) positioned on the first side (106) and operative to display first information;
a second display (304) positioned on the second side (208) and operative to display second information that is based upon the first information,
at least one sensor (2182) operative to detect a change in viewing orientation; and
at least one processor (2102) communicatively coupled with the first display, the second display (304) and the at least one sensor (2182), the at least one processor (2102) configured to change at least one of the first information and the second information in response to the at least one sensor (2102) detecting the change in viewing orientation; in which the change on a given one of the first and second displays is based upon a current application on the respective other one of the first and second displays.

2. The handheld electronic device (100) of claim 1, wherein the processor (2102) is configured to change information by shutting off one of the first display (102).

3. The handheld electronic device (100) of any of claims 1 or 2, wherein the first display (102) has first display (102) capabilities and the second display (304) has second display capabilities different than the first display (102) capabilities.

4. The handheld electronic device (100) of claim 3, wherein the second display capabilities include one or more of a display size, a 3-D capability, a resolution, a speed, and a color rendering capability.

5. The handheld electronic device (100) of any of claims 1, 2, 3, or 4, further comprising:
at least one user input communicatively coupled with the processor (2102) and positioned on the second side, the at least one user input operative to enter data associated with the first information responsive to a prompt displayed on the first display (102).

6. The handheld electronic device (100) of any of claims 1, 2, 3, 4, or 5, wherein the first display (102) is a touch sensitive display, the handheld electronic device (100) further comprising a mechanical keyboard positioned on the second side.

7. The handheld electronic device (100) of any of claims 1, 2, 3, 4, 5, or 6, wherein the processor (2102) is further configured to execute an associated software process in response to the at least one sensor detecting the change in viewing orientation.

8. The handheld electronic device (100) of any of claims 1, 2, 3, 4, 5, 6, or 7, wherein at least one of the first display (102) and the second display (304) is operative to display sequentially indexed content, the processor (2102) is further configured to pause display of the sequentially indexed content in response to the at least one sensor detecting the change in viewing orientation.

9. The handheld electronic device (100) of any of claims 1, 2, 3, 4, 5, 6, 7 or 8, further comprising at least one input device communicatively coupled with the processor (2102), wherein the processor (2102) is further configured to change functionality of the at least one input device in response to the at least one sensor detecting the change in viewing orientation.

10. The handheld electronic device (100) of any of claims 1, 2, 3, 4, 5, 6, 7, 8, or 9, wherein at least a portion of the first information is displayed at an initial size, the processor (2102) is further configured to display content selected from the first information upon the second display (304) at a size larger than the initial size in response to the at least one sensor detecting the change in viewing orientation.

11. The handheld electronic device (100) of any of claims 1, 2, 3, 4, 5, 6, 7, 8, 9, or 10, wherein the processor (2102) is further configured to:
display an active field on the first display (102); and
in response to the active field being activated, change the second information.

12. The handheld electronic device (100) of any of claims 1, 2, 3, 4, 5, 6, 7, 8, 9, 10, or 11, wherein the at least one sensor is operative to detect a position of a user's hand.

13. The handheld electronic device (100) of any of claims 1, 2, 3, 4, 5, 6, 7, 8, 9, 10, 11, or 12, wherein the first side faces a first direction along an axis and the second side faces a second direction opposite the first direction along the axis, and wherein the first display (102) has a first backside and the second display (304) has a second backside, the first backside faces the second backside.

14. The handheld electronic device (100) of claim 13, wherein the first display (102) has first display (102) capabilities and the second display (304) has second display capabilities different than the first display (102) capabilities.

15. A method performed on a handheld electronic device (100), the handheld electronic device (100) having at least one sensor, a housing having a first side and a second side, a first display (102) positioned on the first side, and a second display (304) positioned on a second side, the method comprising:
displaying first information on the first display (102);
displaying second information on the second display (304), the second information being based on the first information,;
detecting, using the at least one sensor, a change in viewing orientation; and
changing the second information, in response to detecting a change in viewing orientation with the at least one sensor; in which the change is based upon a current application on the first display.

## Patentansprüche

1. Handelektronikvorrichtung (100) mit:
einem Gehäuse mit einer ersten Seite (106) und einer zweiten Seite (208);
einer ersten Anzeige (102), die auf der ersten Seite (106) positioniert ist, und dazu betriebsfähig ist, erste Information anzuzeigen;
einer zweiten Anzeige (304), die auf der zweiten Seite (208) positioniert ist, und dazu betriebsfähig ist, zweite Information anzuzeigen, die auf der ersten Information basiert;
mindestens einem Sensor (2182), der dazu betriebsfähig ist, eine Änderung in einer Ansichtsorientierung zu erfassen; und
mindestens einem Prozessor (2102), der kommunikativ mit der ersten Anzeige, der zweiten Anzeige (304) und dem mindestens einen Sensor (2182) gekoppelt ist, wobei der mindestens eine Prozessor (2102) dazu konfiguriert ist, mindestens eines aus der ersten Information und der zweiten Information als Reaktion darauf zu ändern, dass der mindestens eine Sensor (2102) die Änderung in einer Ansichtsorientierung erfasst; wobei die Änderung an einem vorgegebenen der ersten und der zweiten Anzeige auf einer aktuellen Anwendung auf der jeweilig anderen der ersten und der zweiten Anzeige basiert.

2. Handelektronikvorrichtung (100) nach Anspruch 1, wobei der Prozessor (2102) dazu konfiguriert ist, Information durch Ausschalten einer der ersten Anzeige (102) zu ändern.

3. Handelektronikvorrichtung (100) nach Anspruch 1 oder 2, wobei die erste Anzeige (102) erste Anzeige-(102)-Fähigkeiten hat und die zweite Anzeige (304) zweite Anzeigefähigkeiten hat, die von den Anzeige-(102)-Fähigkeiten verschieden sind.

4. Handelektronikvorrichtung (100) nach Anspruch 3, wobei die zweiten Anzeigefähigkeiten eines oder mehrere aus einer Anzeigegröße, einer 3D-Fähigkeit, einer Auflösung, einer Geschwindigkeit und einer Farbwiedergabefähigkeit enthalten.

5. Handelektronikvorrichtung (100) nach einem der Ansprüche 1, 2, 3 oder 4, ferner mit:
mindestens einer Benutzereingabe, die kommunikativ mit dem Prozessor (2102) gekoppelt ist und auf der zweiten Seite positioniert ist, wobei die mindestens eine Benutzereingabe dazu betriebsfähig ist, Daten, die mit der ersten Information verknüpft sind, als Reaktion auf eine Aufforderung einzugeben, die an der ersten Anzeige (102) angezeigt ist.

6. Handelektronikvorrichtung (100) nach einem der Ansprüche 1, 2, 3, 4 oder 5, wobei die erste Anzeige (102) eine berührungsempfindliche Anzeige ist, wobei die Handelektronikvorrichtung (100) ferner eine mechanische Tastatur aufweist, die auf der zweiten Seite positioniert ist.

7. Handelektronikvorrichtung (100) nach einem der Ansprüche 1, 2, 3, 4, 5 oder 6, wobei der Prozessor (2102) ferner dazu konfiguriert ist, einen verknüpften Softwareprozess als Reaktion darauf auszuführen, dass der mindestens eine Sensor die Änderung in der Ansichtsorientierung erfasst.

8. Handelektronikvorrichtung (100) nach einem der Ansprüche 1, 2, 3, 4, 5, 6 oder 7, wobei mindestens eine der ersten Anzeige (102) und der zweiten Anzeige (304) ferner dazu betriebsfähig ist, sequentiell indizierten Inhalt anzuzeigen, wobei der Prozessor (2102) ferner dazu konfiguriert ist, das Anzeigen des sequentiell indizierten Inhalts als Reaktion darauf zu pausieren, dass der mindestens eine Sensor die Änderung in einer Ansichtsorientierung erfasst.

9. Handelektronikvorrichtung (100) nach einem der Ansprüche 1, 2, 3, 4, 5, 6, 7 oder 8, ferner mit mindestens einer Eingabevorrichtung, die kommunikativ mit dem Prozessor (2102) gekoppelt ist, wobei der Prozessor (2102) ferner dazu konfiguriert ist, Funktionalität der mindestens einen Eingabevorrichtung als Reaktion darauf zu ändern, dass der mindestens eine Sensor die Änderung in einer Ansichtsorientierung erfasst.

10. Handelektronikvorrichtung (100) nach einem der Ansprüche 1, 2, 3, 4, 5, 6, 7, 8 oder 9, wobei mindestens ein Teil der ersten Information in einer anfänglichen Größe angezeigt wird, wobei der Prozessor (2102) ferner dazu konfiguriert ist, den Inhalt, der von der ersten Information ausgewählt ist, auf der zweiten Anzeige (304) in einer größeren Größe als der anfänglichen Größe als Reaktion darauf anzuzeigen, dass der mindestens eine Sensor die Änderung in einer Ansichtsorientierung erfasst.

11. Handelektronikvorrichtung (100) nach einem der Ansprüche 1, 2, 3, 4, 5, 6, 7, 8, 9 oder 10, wobei der Prozessor (2102) ferner dazu konfiguriert ist,
ein aktives Feld auf der ersten Anzeige (102) anzuzeigen und
als Reaktion darauf, dass das aktive Feld aktiviert ist, die zweite Information zu ändern.

12. Handelektronikvorrichtung (100) nach einem der Ansprüche 1, 2, 3, 4, 5, 6, 7, 8, 9, 10 oder 11, wobei der mindestens eine Sensor dazu betriebsfähig ist, eine Position einer Hand des Benutzers zu erfassen.

13. Handelektronikvorrichtung (100) nach einem der Ansprüche 1, 2, 3, 4, 5, 6, 7, 8, 9, 10, 11 oder 12, wobei die erste Seite in eine erste Richtung entlang einer Achse zeigt und die zweite Seite in eine zweite Richtung entgegen der ersten Richtung entlang der Achse zeigt, und wobei die erste Anzeige (102) eine erste Rückseite hat und die zweite Anzeige (304) eine zweite Rückseite hat, wobei die erste Rückseite der zweiten Rückseite gegenüberliegt.

14. Handelektronikvorrichtung (100) nach Anspruch 13, wobei die erste Anzeige (102) erste Anzeige-(102)-Fähigkeiten hat und die zweiten Anzeige (304) zweite Anzeigefähigkeiten hat, die von den ersten Anzeige-(102)-Fähigkeiten verschieden sind.

15. Verfahren, das auf einer Handelektronikvorrichtung (100) durchgeführt wird, wobei die Handelektronikvorrichtung (100) mindestens einen Sensor, ein Gehäuse, das eine erste Seite und eine zweite Seite hat, eine erste Anzeige (102), die auf der ersten Seite positioniert ist, und eine zweite Anzeige (304) hat, die auf der zweiten Seite positioniert ist, wobei das Verfahren Folgendes aufweist:
Anzeigen erster Information auf der ersten Anzeige (102),
Anzeigen zweiter Information auf der zweiten Anzeige (304), wobei die zweite Information auf der ersten Information basiert,
Erfassen einer Änderung in einer Ansichtsorientierung unter Verwendung des mindestens einen Sensors und
Ändern der zweiten Information als Reaktion auf das Erfassen einer Änderung in einer Ansichtsorientierung mit dem mindestens einen Sensor, wobei die Änderung auf einer aktuellen Anwendung auf der ersten Anzeige basiert.

## Revendications

1. Dispositif électronique portatif (100) comprenant :
un boîtier possédant un premier côté (106) et un second côté (208) ;
un premier écran d'affichage (102) placé sur le premier côté (106) et en mesure d'afficher des premières informations ;
un second écran d'affichage (304) placé sur le second côté (208) et en mesure d'afficher des secondes informations qui sont fondées sur les premières informations ;
au moins un capteur (2182) en mesure de détecter un changement de l'orientation de l'affichage ; et
au moins un processeur (2102) couplé et communiquant avec le premier écran d'affichage, le second écran d'affichage (304) et ledit au moins un capteur (2182), ledit au moins un processeur (2102) étant configuré pour modifier au moins soit les premières informations, soit les secondes informations, à la suite du fait que ledit au moins un capteur (2182) a détecté le changement dans l'orientation de l'affichage ; dans lequel le changement sur l'un des premier et second écrans d'affichage se fonde sur une application en cours sur l'autre desdits premier et second écrans d'affichage.

2. Dispositif électronique portatif (100) selon la revendication 1, dans lequel le processeur (2102) est configuré pour modifier les informations en coupant un du premier écran d'affichage (102).

3. Dispositif électronique portatif (100) selon la revendication 1 ou 2, dans lequel le premier écran d'affichage (102) a des capacités de premier écran d'affichage (102) et le second écran d'affichage (304) a des capacités de second écran d'affichage, différentes des capacités de premier écran d'affichage (102).

4. Dispositif électronique portatif (100) selon la revendication 3, dans lequel les capacités de second écran d'affichage comprennent une ou plusieurs des suivantes :
taille de l'écran d'affichage, capacité de 3D, résolution, vitesse, et capacité de rendu des couleurs.

5. Dispositif électronique portatif (100) selon l'une quelconque des revendications 1, 2, 3 et 4, comprenant en outre :
au moins un dispositif de saisie par l'utilisateur, couplé et communiquant avec le processeur (2102) et placé sur le second côté, ledit au moins un dispositif de saisie par l'utilisateur étant en mesure de saisir des données associées aux premières informations à la suite d'un message d'invite affiché sur le premier écran d'affichage (102).

6. Dispositif électronique portatif (100) selon l'une quelconque des revendications 1, 2, 3, 4 et 5, dans lequel le premier écran d'affichage (102) est un écran d'affichage tactile, le dispositif électronique portatif (100) comprenant en outre un clavier mécanique placé sur le second côté.

7. Dispositif électronique portatif (100) selon l'une quelconque des revendications 1, 2, 3, 4, 5 et 6, dans lequel le processeur (2102) est en outre configuré pour exécuter un processus logiciel associé en réponse à la détection du changement d'orientation de l'affichage par ledit au moins un capteur.

8. Dispositif électronique portatif (100) selon l'une quelconque des revendications 1, 2, 3, 4, 5, 6 et 7, dans lequel au moins l'un du premier écran d'affichage (102) et du second écran d'affichage (304) est en mesure d'afficher des contenus indexés séquentiellement, le processeur (2102) étant en outre configuré pour mettre en pause l'affichage des contenus indexés séquentiellement en réponse à la détection du changement d'orientation de l'affichage par ledit au moins un capteur.

9. Dispositif électronique portatif (100) selon l'une quelconque des revendications 1, 2, 3, 4, 5, 6, 7 et 8, comprenant en outre au moins un dispositif de saisie couplé et communiquant avec le processeur (2102), dans lequel le processeur (2102) est en outre configuré pour changer une fonctionnalité dudit au moins un dispositif de saisie en réponse à la détection du changement d'orientation de l'affichage par ledit au moins un capteur.

10. Dispositif électronique portatif (100) selon l'une quelconque des revendications 1, 2, 3, 4, 5, 6, 7, 8 et 9, dans lequel au moins une partie des premières informations est affichée dans une taille initiale, le processeur (2102) est en outre configuré pour afficher des contenus sélectionnés dans les premières informations sur le second écran d'affichage (304) avec une taille supérieure à la taille initiale en réponse à la détection du changement d'orientation de l'affichage par ledit au moins un capteur.

11. Dispositif électronique portatif (100) selon l'une quelconque des revendications 1, 2, 3, 4, 5, 6, 7, 8, 9 et 10, dans lequel le processeur (2102) est en outre configuré pour :
afficher une zone active sur le premier écran d'affichage (102) ; et
en réponse à l'actionnement de la zone active, modifier les secondes informations.

12. Dispositif électronique portatif (100) selon l'une quelconque des revendications 1, 2, 3, 4, 5, 6, 7, 8, 9, 10 et 11, dans lequel ledit au moins un capteur est en mesure de détecter une position de la main de l'utilisateur.

13. Dispositif électronique portatif (100) selon l'une quelconque des revendications 1, 2, 3, 4, 5, 6, 7, 8, 9, 10, 11 et 12, dans lequel le premier côté fait face à une première direction selon un axe et le second côté fait face à une seconde direction, opposée à la première direction selon l'axe, et dans lequel le premier écran d'affichage (102) possède une première face arrière et le second écran d'affichage (304) possède une seconde face arrière, la premier face arrière faisant face à la seconde face arrière.

14. Dispositif électronique portatif (100) selon la revendication 13, dans lequel le premier écran d'affichage (102) possède des capacités de premier écran d'affichage (102) et le second écran d'affichage (304) possède des capacités de second écran d'affichage, différentes des capacités de premier écran d'affichage (102).

15. Procédé exécuté sur un dispositif électronique portatif (100), le dispositif électronique portatif (100) possédant au moins un capteur, un boîtier ayant un premier côté et un second côté, un premier écran d'affichage (102) placé sur le premier côté et un second écran d'affichage (304) placé sur un second côté, le procédé comprenant les étapes consistant à :
afficher des premières informations sur le premier écran d'affichage (102) ;
afficher des secondes informations sur le second écran d'affichage (304), les secondes informations étant fondées sur les premières informations ;
détecter, à l'aide dudit au moins un capteur, un changement d'orientation de l'affichage ; et
modifier les secondes informations, à la suite de la détection du changement d'orientation de l'affichage par ledit au moins un capteur ; le changement étant fondé sur une application en cours sur le premier écran d'affichage.
